# EUROPEAN PATENT SPECIFICATION

(11) **EP 3 382 537 B1**
(45) Date of publication and mention of the grant of the patent: **19.08.2020**
(21) Application number: 18162258.0
(22) Date of filing: 16.03.2018
(51) Int. Cl.: G06F 9/455, G06F 21/57, H04L 29/06

(54) **VERIFYING THAT USAGE OF VIRTUAL NETWORK FUNCTION (VNF) BY A PLURALITY OF COMPUTE NODES COMPLY WITH ALLOWED USAGE RIGHTS**
ÜBERPRÜFEN, OB DIE NUTZUNG DER VIRTUELLEN NETZWERKFUNKTION (VNF) DURCH EINE VIELZAHL VON RECHENKNOTEN MIT DEN ERLAUBTEN NUTZUNGSRECHTEN ÜBEREINSTIMMT.
VÉRIFICATION DE LA CONFORMITÉ DE L'UTILISATION DE LA FONCTION DE RÉSEAU VIRTUEL (VNF) PAR UNE PLURALITÉ DE N UDS DE CALCUL, AUX DROITS D'UTILISATION AUTORISÉS

(30) Priority: 29.03.2017 US 201715472939
(43) Date of publication of application: 03.10.2018
(73) Proprietor: Hewlett Packard Enterprise Development LP, Houston, TX 77070 (US)
(72) Inventor: Sharma, Puneet, Palo Alto, CA 94304-1100 (US); Raghuramu, Arun, Palo Alto, CA 94304-1100 (US); Lee, David, Palo Alto, CA 94304-1100 (US)
(74) Representative: Haseltine Lake Kempner LLP

(56) References cited:
- WO-A1-2016/026129
- WENJUAN XU ET AL: "DR@FT: Efficient Remote Attestation Framework for Dynamic Systems", COMPUTER SECURITY - ESORICS 2010, SPRINGER BERLIN HEIDELBERG, BERLIN, HEIDELBERG, vol. 6345, 20 September 2010 (2010-09-20), pages 182-198, XP019150407, ISBN: 978-3-642-15496-6
- INTEL CORPORATION (UK) LTD: "GS NFV-SEC013-Change Request", ETSI DRAFT; NFV(17)000023R1, EUROPEAN TELECOMMUNICATIONS STANDARDS INSTITUTE (ETSI), 650, ROUTE DES LUCIOLES ; F-06921 SOPHIA-ANTIPOLIS ; FRANCE, [Online] vol. ISG NFV Network Functions Virtualisation, 21 February 2017 (2017-02-21), pages 1-54, XP014307892, Retrieved from the Internet: URL:docbox.etsi.org/ISG/NFV/05-CONTRIBUTIO NS/2017/2017_02_21_PL_NFV#17-Bilbao/NFV(17 )000023r1_GS_NFV-SEC013-Change_Request/gs_ nfv-sec013v000011-rl.docx> [retrieved on 2017-02-21]
- FREDERIC STUMPF ET AL: "Improving the scalability of platform attestation", PROCEEDINGS OF THE 3RD ACM WORKSHOP ON SCALABLE TRUSTED COMPUTING, STC '08, ACM PRESS, NEW YORK, NEW YORK, USA, 31 October 2008 (2008-10-31), pages 1-10, XP058288621, DOI: 10.1145/1456455.1456457 ISBN: 978-1-60558-295-5

## Description

### BACKGROUND

Network functions virtualization (NFV) generally refers to a network architecture that uses IT virtualization to virtualize classes of network node functions into building blocks (e.g., firewall, load balancer, etc.) that may connect or chain together to create communication services. When operators buy network services from virtual network function (VNF) vendors, the VNF vendors may define allowed usage rights for the operators. On the one hand, NFV allows operators to flexibly scale network function capacity. On the other hand, the scale and dynamics of NFV make it difficult to manage VNF usage right policy compliance. In-person audits from the VNF vendors are not scalable, and dynamic issuance of usage right keys from a key server may introduce complex key management issues. Further, active monitoring of VNF usage data may not be reliable and trusted, because the infrastructure or the operators can tamper with the VNF usage data. Document WO2016026129 discloses a security and trust framework for virtualized networks.

### BRIEF DESCRIPTION OF THE DRAWINGS

The following detailed description references the drawings, wherein:
FIG. 1 is a block diagram of an example architecture for verifying that usage of virtual network function (VNF) by a plurality of compute nodes comply with allowed usage rights;
FIG. 2 is a sequence diagram of an example process of verifying that usage of VNF by a plurality of compute nodes comply with allowed usage rights;
FIGs. 3A-3B are block diagrams of example constructions of content proofs;
FIGs. 4A-4B are flowcharts of an example process of verifying that usage of VNF by a plurality of compute nodes comply with allowed usage rights;
FIG. 5 is a flowchart of an example process of verifying that usage of VNF by a plurality of compute nodes comply with allowed usage rights;
FIG. 6 is a flowchart of an example process of verifying that usage of VNF by a plurality of compute nodes comply with allowed usage rights;
FIG. 7 is a block diagram of an example network device to verify that usage of VNF by a plurality of compute nodes comply with allowed usage rights; and
FIG. 8 is a block diagram of an example network device to verify that usage of VNF by a plurality of compute nodes comply with allowed usage rights.

### DETAILED DESCRIPTION

The invention is defined by the independent claims. Preferred embodiments are set out in the dependent claims. To address the challenges mentioned above, implementation of the solution described herein involve a trusted framework for VNF usage rights policy compliance. This architecture provides a way to realize trusted, capacity or utilization based usage rights compliance for NFV services. VNF vendors can perform on-demand or periodic audits of operator network deployments and obtain trusted proofs of usage rights compliance. These proofs can be generated using the Trusted Platform Module (TPM) and employ efficient cryptographic constructions for ensuring scalability.

In some implementations of this solution, a network device can act as an orchestrator host for a virtual network function (VNF) and establish a trust relationship with a VNF vendor that dynamically specify a set of usage right policies. Further, the network device can determine allowed usage rights associated with the VNF based on the set of usage right policies. Then, the network device can install the VNF on a plurality of compute nodes based on the allowed usage rights. Next, the network device can periodically audit or audit on-demand the VNF usage right policy compliance. Specifically, the network device can audit the VNF usage right policy compliance by: issuing a proof quote request to the plurality of compute nodes; receiving a proof quote response comprising a plurality of resource states on the plurality of compute nodes; and verifying whether resource usage of the VNF on the plurality of compute nodes complies with the allowed usage rights based on the proof quote response. The audit function can be performed by the network device either on-premise or by the VNF vendor on and off-premise location. In some examples, a trusted third party can also perform the audit on an off-premise location.

### Architecture

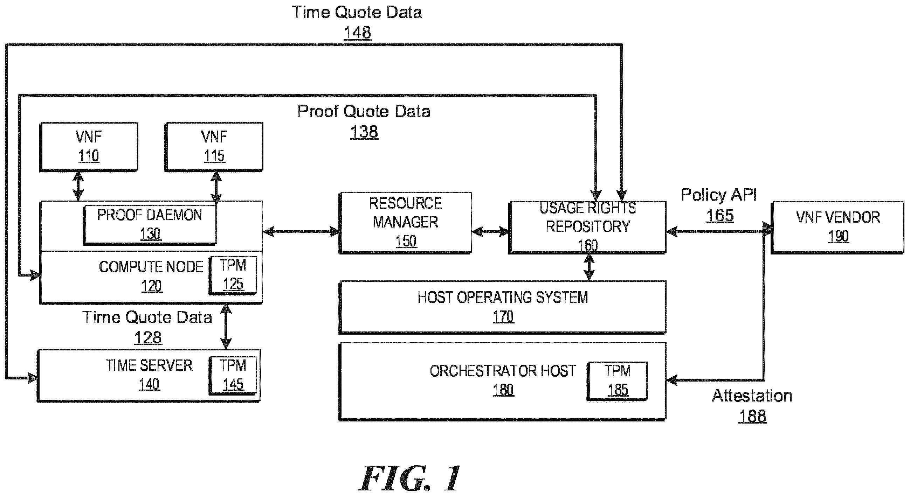

FIG. 1 is a block diagram of an example architecture for verifying that resource usage of virtual network function (VNF) by a plurality of compute nodes comply with allowed usage rights. Specifically, FIG. 1 includes a VNF vendor 190 that is communicatively coupled with an orchestrator host 180. Here, orchestrator host 180 includes a hardware component trusted platform module (TPM) 185 and runs a host operating system 170. TPM generally refers to a secure cryptoprocessor that is a dedicated microcontroller to secure hardware by integrating cryptographic keys into devices. TPM can contain several Platform Configuration Registers (PCRs) that allow a secure storage and reporting of relevant metrics. These metrics can be used to detect changes to previous configurations and to derive decisions on how the host shall proceed.

Orchestrator operating system 170 can be any software, which is deployed on orchestrator host 180 and supports host functions, such as, scheduling tasks, executing applications, provisioning remote compute nodes, installing VNFs on remote compute nodes, managing usage right policies, monitoring VNF usages, etc. Orchestrator operating system 170 can be communicatively coupled to a resource manager 150 and a usage rights repository 160. In one example, host operating system 170 may run an OpenStack cloud controller acting as an orchestrator that operates both resource manager 150 and usage rights repository 160.

Resource manager 150 can be a process residing on orchestrator host 180, or a separate hardware component. Resource manager 150 can provision the VNFs to appropriate remote compute nodes 120. Resource manager 150 also communicates with usage rights repository 160 to obtain appropriate usage rights information and issue to remote compute nodes 120. In some examples, resource manager 150 can issue VNF usage right compliance audit checks to remote compute nodes 120.

Usage rights repository 160 generally stores VNF usage right policies received via policy API 165 from VNF vendor 190. The VNF usage right policies generally include a set of limits on the deployment of VNFs in the VNF operator's computing environment. The VNF usage right policy is described in details in the section below. These VNF usage right policies can be used to provision VNFs to appropriate remote compute nodes 120. They can also be used in the remote attestation proof 188 to assure the trust between VNF vendor 190 and VNF orchestrator host 180. Moreover, based on the usage right policies, the audit check can be issued periodically to remote compute nodes 120.

In some examples, VNF vendor can delegate orchestrator host 180 to perform the usage right compliance audit. In order to maintain the integrity of the system, usage rights repository 160 is included in the remote attestation proof 188 of orchestrator host 180. In some examples, orchestrator host 180 may include measurements of system state from boot-time, including measurements of the usage rights repository binary, in the attestation proof 188 to prove its trustworthiness. The system decouples audit request and enforcement process. Thus, when usage rights compliance is verified at VNF usage right repository 160, details of remote compute nodes 120 are hidden from external VNF vendor 190.

Moreover, FIG. 1 includes a plurality of compute nodes 120. Each compute node 120 includes a TPM 125 and a proof daemon 130. The plurality of compute nodes 120 can have various VNFs installed, such as, VNF 110 and VNF 115. Each VNF can be a block of virtualized instances (e.g., virtual machines or containers) of network functions, such as, a firewall, a load balancer, an intrusion detection system, etc.

Finally, FIG. 1 includes a time server 140 that can generate time quote data periodically. Time server 140 may be implemented in any server or general purpose computer. Time server 140 also includes a TPM 145. In the VNF usage right compliance audit, each compliance proof can be tied to a particular timestamp. NFV operators can prove compliance at different instances of time by exchanging time quote data. For example, time server 140 can periodically exchange time quote data 128 with compute node 120. Also, time server 140 can periodically exchange time quote data 148 with usage rights repository 160.

Specifically, time server 140 may receive a time quote request from compute node 120 or usage rights repository 160. In response, time server 140 may return a timestamp tᵢ in the form of the following proof: Quote (Hₜₛ, S_{Hts}, h(tᵢ)) tᵢ. Here, Quote (H, s, c) generally refers to a TPM quote operation with host "H," PCR state "s," and quote challenge "c;" Hₜₛ generally refers to time server 140. tᵢ generally refers to the timestamp returned by time server 140; h generally refers to the hash function, such as, SHA1, and generally refers to a concatenation operator. Therefore, the above proof indicates that time server 140 produced the timestamp tᵢ, and that when time quote data 128 was produced, the PCR state of time server 140 is S_{Hts}. When a recipient (e.g., usage rights repository 160) receives time quote data 128 as a proof, the recipient can check the signature in the proof, and check the state of the PCRs, and check the timestamp. This allows to ensure integrity of the received timestamp and to establish the trustworthiness of the time server 140.

Note that time server 140 can periodically generate time quote data 128, or generate time quote data 128 on-demand (e.g., in response to a time quote request). Thereafter, when proof daemon 130 associated with compute node 120 receives time quote data 128, proof daemon 130 can then use the timestamp in the time quote data 128 as well as the time quote data 128 to generate proof quote data 138. In some examples, when a usage rights compliance audit is requested, proof daemon 130 can send proof quote data 138 to orchestrator host 180. In other examples, proof daemon 130 can automatically push proof quote data 138 to orchestrator host 180 in response to a new proof being generated.

During operations, NFV operators need to continuously prove usage rights compliance to VNF vendor 190 in a scalable manner. Therefore, the architecture illustrated in FIG. 1 provides a trusted, capacity and utilization based usage rights compliance verification for NFV services. Specifically, VNF vendor 190 initiates a remote attestation 188 to orchestrator host 180 with a quote request. Orchestrator host 180 then can request a proof from compute node 120 through usage rights repository 160. In response, compute node 120 can return proof quote data 138 to usage rights repository 160.

As used herein, a "remote attestation" generally refers to a capability of the TPM, which allows a third party to verify that the hardware and/or software on a host has not been changed or tampered with. The remote attestation can be supported with the help of a quote operation. The quote operation generally refers to an operation that creates an unforgeable hash key summary of a computing system's hardware and/or software states, as well as resource usage and/or allocation. The program hashing the data determines the extent of the summary of the computing system. In some examples, the current states of the PCRs of the TPM along with a challenge are signed with the key present in the TPM to form the quote response.

As used herein, a "quote challenge" generally refers to a remote party offering a challenge nonce in a quote request to the host, which is trying to prove its state via the remote attestation. This quote challenge can be used to ensure the freshness of the quote. It can also be used for other purposes, such as, binding data to the integrity state of the host that created and/or delivered it.

As used herein, a "chain of trust" may be established by validating each component of the hardware and software of a computing system from the lowest layer to the highest layer (e.g. bootloader, to kernel, followed by user applications, etc.). The trustworthiness of each layer can be guaranteed by the trustworthiness of the layer before it. The chain of trust ensures that trusted software and hardware can be used while still retaining flexibility.

The primary scope of a TPM is to assure the integrity of a platform. In this context, "integrity" generally means "behave as intended," and a "platform" can generically refer to any computer platform, not limited to any personal computers or a particular operating system. Platform integrity check starts from the power-on boot process in a trusted condition and extends this chain of trust until the operating system has fully booted and applications are running.

As used herein, "cryptographic proof system" generally refers to a construction used to efficiently authenticate collections of objects using one or more cryptographic operations. For example, Merkle tree is a type of cryptographic proof system. Authenticated dictionaries can be another type of cryptographic proof system.

### VNF Usage Right Compliance Audit

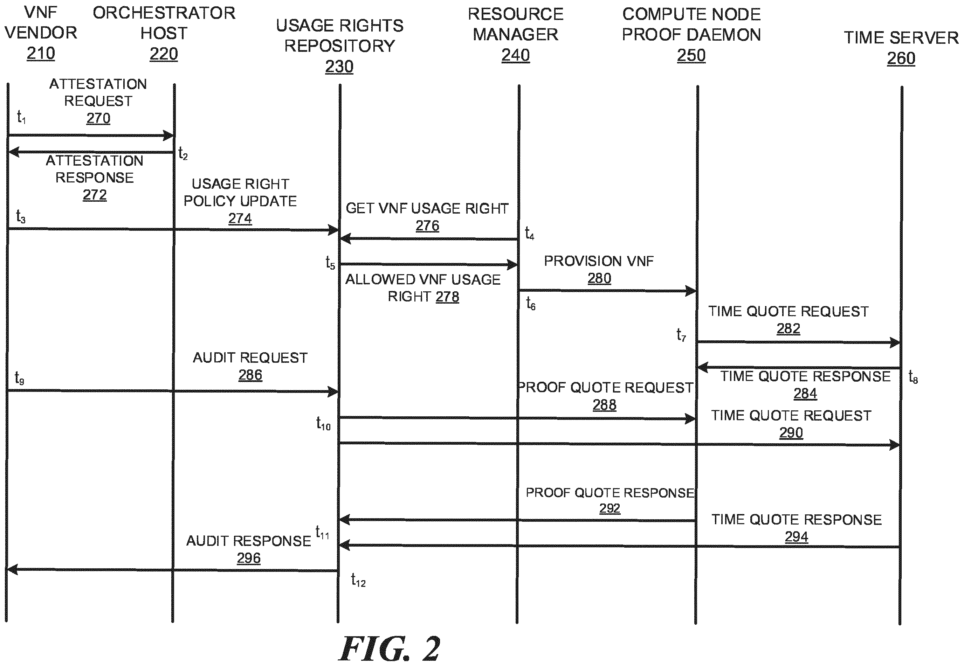

FIG. 2 is a sequence diagram of an example process of verifying that usage of VNF by a plurality of compute nodes comply with allowed usage rights. FIG. 2 includes a VNF vendor 210, an orchestrator host 220, a usage rights repository 230, a resource manager 240, a compute node 250 (including a proof daemon), and a time server 260.

In order to audit VNF usage compliance, VNF vendor 210 first establishes a trust relationship with orchestrator host 220 through a remote attestation process. Specifically, at time point t₁, VNF vendor 210 sends an attestation request 270 to orchestrator host 220. Thereafter, at time point t₂, orchestrator host 220 sends an attestation response 272 to VNF vendor 210. Here, attestation request 270 request may include a nonce. Then, attestation response 272 may include a combination of PCR states and another nonce. Also, the combination is signed by a security key generated by the TPM. After receiving attestation response 272, VNF vendor 210 can check the signature, the nonce, and the state of the PCRs. A match between the nonce in attestation request 270 and attestation response 272 indicates that the attestation response 272 is a reply to attestation request 270. If the state of the PCRs match the expected states, a trust relationship is established between VNF vendor 210 and orchestrator host 220.

Next, VNF vendor 210 can periodically update usage right policy in usage rights repository 230. In the example illustrated in FIG. 2, at time point t₃, VNF vendor 210 sends a usage right policy update 274 to update the usage rights policies store in usage rights repository 230. In usage right policy update, VNF vendor 210 can specify usage rights to the VNF operator in the form of a policy XML. Moreover, the VNF vendor usage rights policy can dictate the limits on deployment of the VNFs in the operator's computing environment.

Subsequently, at time point t₄, resource manager 240 may request to get VNF usage right 276 from usage rights repository 230. In some examples, resource manager 240 may initiate a request to get VNF usage right 276 periodically. In some examples, resource manager 240 may initiate a request to get VNF usage right 276 in response to some infrastructure or workload changes causing in a change in the number of VNF instantiations, e.g., addition of a new server, removing an instance of VNF, etc.

At time point t₅, usage rights repository 230 sends allowed VNF usage right 278 to resource manager 240. Resource manager 240 can then use allowed VNF usage right 278 to provision VNF 280 at time point t₆. For example, if the VNF to be deployed on the remote compute node is a firewall. Resource manager 240 will first check if the remote compute node configurations comply with allowed VNF usage right 278. If so, resource manager 240 can send configurations to the remote compute node and spawn the VNF process (e.g., virtual machine or container) on the remote compute node.

After remote compute node is provisioned to run the VNF, the remote compute node's proof daemon 250 may start to generate proofs. Proof generation may involve periodically receive time quote data from time server 260. For example, at time point t₇, proof daemon on compute node 250 may send a time quote request 282 to time server 260. In response, at time point t₈, time server 260 replies with a time quote response 284.

VNF vendor 210 can request an audit to VNF operator either on-demand or periodically. In this example, at time point t₉, VNF vendor 210 sends an audit request 286 to usage rights repository 230 at the orchestrator. In response, at time point t₁₀, usage rights repository 230 generates a proof quote request 288 and sends it to compute node proof daemon 250. Meanwhile, usage rights repository 230 also sends a time quote request 290 to time server 260.

Thereafter, at time point t₁₁, usage rights repository 230 receives a proof quote response 292 from compute node proof daemon 250 in response to proof quote request 288. Around the same time, usage rights repository 230 may also receive time quote response 294 from time server 260 in response to time quote request 290. Usage rights repository 230 then verifies the proofs at time point t₁₂, and sends an audit response 296 to VNF vendor 210.

In some examples, VNF usage right compliance audit can be performed by VNF vendor 210. Thus, instead of verifying the proofs at usage rights repository 230, at time point t₁₂, usage right repository 230 can send proof quote 292 and time quote 294 to VNF vendor 210 in audit response 296. Upon receiving audit response 296, VNF vendor will check the proofs and determine whether remote compute node 250 complies with allowed VNF usage rights.

In some examples, VNF usage right compliance audit can be performed by a trusted third party. Thus, at time point t₁₂, usage right repository 230 can send proof quote 292 and time quote 294 to a trusted third party in audit response 296. Upon receiving audit response 296, the trusted third party can check the proofs and determine whether remote compute node 250 complies with allowed VNF usage rights. Then, the trusted third party can notify the compliance audit results to the VNF vendor 210 and/or usage rights repository 230.

Note that each remote compute node running the VNF writes a plurality of hash values into the PCRs of the TPM as verification of the VNF states. On the other hand, VNF vendor can maintain a database of the expected VNF states, and compare the received hash values with the expected VNF states. A mismatch between the received hash values and the expected VNF states may indicate incidents of noncompliance in VNF usage rights. The mismatch may also indicate that the VNF has been tampered (e.g., the remote compute node may be running a pirated version of the VNF).

In some examples, besides each remote compute node running the VNF, each component associated with the orchestrator host, such as, resource manager and usage right repository, also writes their internal state values into the PCRs of the TMP as verification to ensure that the orchestrator host is not compromised.

### Usage Rights Policy

VNF vendors can specify usage rights to the VNF operators in the form of a policy XML. Moreover, VNF vendors' usage rights policies generally include limits on deployment of the VNFs in the VNF operators' computing environment. These limits may be specified in terms of resources allocated to running the VNF vendor's VNFs (e.g., global limits on provisioned number of vCPU's, memory, etc.), load handled by vendor supplied VNF's (e.g., flows processed per second), security and/or privacy limitations (e.g., geolocation, sites where the VNFs can run, etc.), or abstract VNF "run credit" limits assigned to the VNF operators.

Table 1 below is an example usage rights policy in XML format.

**Table 1**

| |
|---|
| ```
 <?xml version="1.0" encoding="utf-8" ?>
 <policy u45>
 <rule1> <type>VNF version 1.1 </type>
 <attribute>maxRunningVNFs</attribute>
 <condition>=</condition> <value>16</value> </rule>
 <rule2> <type>VNF version 1.1 </type>
 <attribute>maxLoad</attribute>
 <condition> <= </condition> <value>10Gbps</value> </rule>
 <rule3> <type>VNF version 1.1 </type>
 <attribute>geoLocation</attribute>
 <condition> == </condition> <value>US</value> <operator> OR
 </operator> <value> Canada <value> </rule>
 </policy u45>
``` |

The abstract "run credit" metric can be vendor specific and allow additional flexibility in accounting/billing. The definition of a single "run credit" may be specified in the <1creditDefinition> tag to the VNF operator. In the example shown in Table 2 below, using two assigned vCPUs for a total of one hour expends one run credit. The resource manager component at the orchestrator can keep track of the run credits used.

**Table 2**

| |
|---|
| ```
 <?xml version="1.0" encoding="utf-8" ?>
 <policy u46>
 <runCredits type="VNF version 1.1"> 1000 </runCredits>
 <1creditDefinition><attribute>vCPU</attribute><condition>==<co
 ndition> <value>2</value> <totalRuntime> 1 hour
 </totalRuntime> </1creditDefinition>
 </policy u46>
``` |

### Proof Construction

In general, communication exchanges in the VNF usage audit involves transmitting signed information on a trusted platform. Each compute node includes a proof daemon that can generate Resource Information Manifests (RIMs) from VNF configurations. In some examples, the proof daemon generates one RIM for each VNF instantiation. The RIMs may include, but are not limited to, configuration attributes, security attributes, and/or load attributes. Examples of configuration attributes may include the number of virtual CPUs, virtual memory, VNF name, VNF version, etc. Moreover, examples of security attributes may include signature check result of VNF image, geolocation, etc. Further, examples of load attributes may include current number of requests received per second on the VNF. Table 3 below illustrates an example RIM XML.

**Table 3**

| |
|---|
| ```
 <?xml version="1.0" encoding="utf-8" ?>
 <resource>
 <attribute> vCPU </attribute> <value>2 </value>
 <attribute> vMem</attribute> <value> 1Gb </value>
 <attribute> HDDSpace </attribute> <value> 1Tb </value>
 </resource>
 <load>
 <avglhr> 10,000 tx/sec </avglhr> <maxlhr> 20,000 tx/sec
 </maxlhr>
 </load>
 <security>
 <imgHash
 type="sha1">038ebc08529bfded3535220dOcb4112319b4f6bb</imgHash>
 <geolocation> Site A </geolocation>
 </security>
``` |

Other formats, such as, JSON and INI can also be used to express RIMs and usage rights policy. In some examples, the proof daemon can generate asynchronous content proofs of RIMs and caches them.

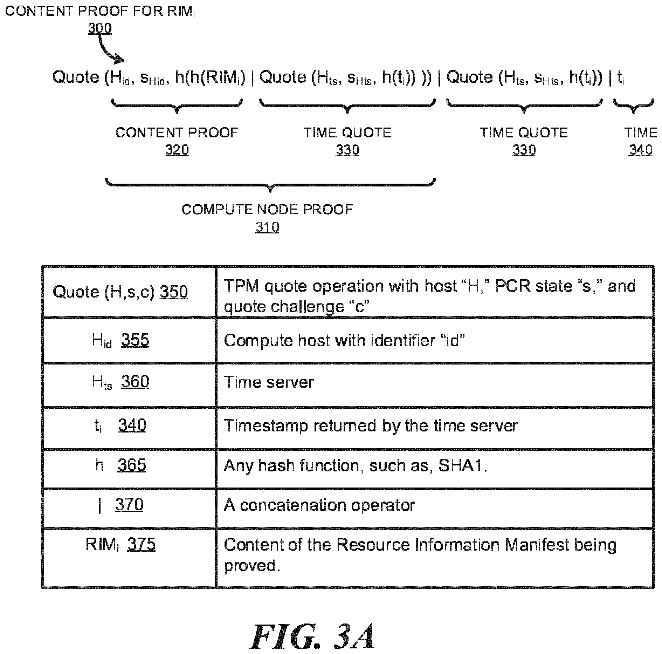

FIGs. 3A-3B illustrate examples of proof construction for VNF usage at the compute nodes. Specifically, FIG. 3A illustrates an example construction of a content proof for RIMᵢ 300 generated by a compute node executing a VNF instantiation. Content proof 300 includes a compute node proof 310, which is appended by a time quote 330 that is concatenated by a time 340. More specifically, compute node proof 310 further includes content proof 320 and time quote 330. Here, time quote 330 is received by the compute node from the time server periodically.

In FIG. 3A, a quote in the format of Quote (H,s,c) 350 generally refers to a TPM quote operation with host "H," PCR state "s," and quote challenge "c." H_{id} 355 generally refers to the compute host with identifier "id." Hₜₛ 360 generally refers to the time server. tᵢ 340 generally refers to the timestamp returned by the timeserver. h 365 generally refers to a hash function, such as, SHA1. | 370 generally refers to a concatenation operator. RIMᵢ 375 generally refers to the content of the Resource Information Manifest (RIM) being proved.

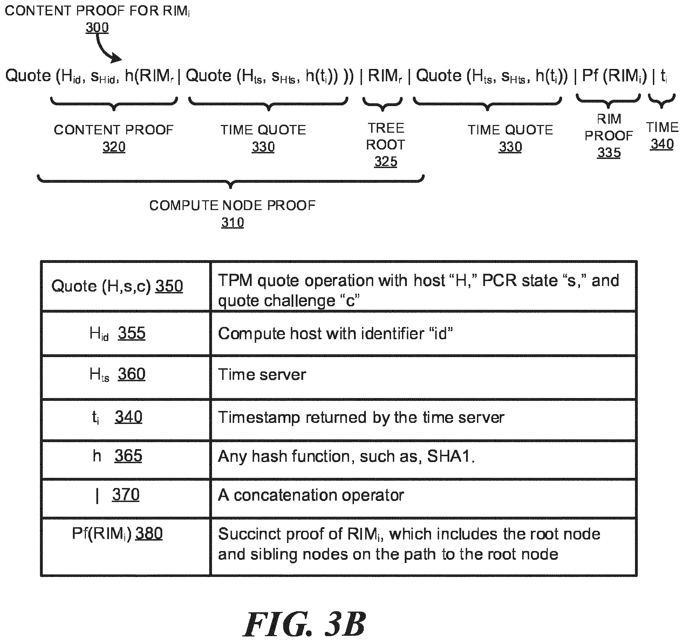

Serving unique proof per RIM using content hashes may not be scalable, because it is limited by the TPM access speed (e.g., 1 second per quote operation). Therefore, a Merkle tree can be constructed with multiple RIMs in a given remote compute node. Referring now to FIG. 3B, FIG. 3B illustrates an example construction of a content proof for RIMᵢ 300 generated by a compute node executing a VNF instantiation.

In this example, content proof may be generated for a RIMᵢ that is a part of multiple RIMs in the compute host. The multiple RIMs may be organized in a Merkle tree or an authenticated dictionary. A Merkle tree generally refers to a tree structure, in which every non-leaf node is labelled with the hash of the labels or values (in case of leaves) of its child nodes. Merkle trees can allow efficient and secure verification of the contents of large data structures. Authenticated dictionaries can be an alternative paradigm to enable verifiable integrity for data storage on untrusted servers, allowing a server to provide a proof in the form of a slice through a cryptographic data structure, that the results of any given query are the correct answer, including that the absence of a query result is correct.

Here, content proof 300 includes a compute node proof 310, which is appended by a time quote 330 and a RIM proof 335 that is concatenated by a time 340. Specifically, compute node proof 310 further includes a content proof 320, a time quote 330, and a tree root 325. As mentioned previously, time quote 330 may be received by the compute node from the time server periodically.

In FIG. 3B, a quote in the format of Quote (H,s,c) 350 generally refers to a TPM quote operation with host "H," PCR state "s," and quote challenge "c." H_{id} 355 generally refers to the compute host with identifier "id." Hₜₛ 360 generally refers to the time server. tᵢ 340 generally refers to the timestamp returned by the timeserver. h 365 generally refers to a hash function, such as, SHA1. | 370 generally refers to a concatenation operator. Pf (RIMᵢ) 380 generally refers to a succinct proof of RIMᵢ, which includes the root node and sibling nodes on the path to the root node in a Merkle tree.

Content proof 300 in FIGs. 3A-3B generally proves that the compute node with identifier H_{id} is in a particular state S_{Hid}. Moreover, it proves that, when content proof 300 was generated, the compute node has a particular RIM file RIMᵢ. Further, content proof 300 was generated at a known time tᵢ, which is verifiable to the VNF vendor. In other words, content proof 300 proves that the particular RIM file RIMᵢ existed at a particular compute node (H_{id}) at a particular time tᵢ, and that the VNF vendor can verify the state (S_{Hid}) of the compute node producing content proof 300, as well as the state (S_{Hts}) of the time server that was used to produce the timestamp for content proof 300.

Once proofs are generated, they are sent over to VNF vendor's verifier along with the RIM. Content proof 300 can demonstrate the integrity of the content and entity serving these contents. In the context of architecture in FIG. 1, the proofs can indicate that the compute nodes that generate the proofs are trustworthy and the VNFs running on those compute nodes are not compromised. Further, asynchronous proofs can keep TPM outside the critical path, therefore improving performance in the VNF usage rights compliance auditing.

With implementations of the solution described herein, a VNF vendor can charge VNF operators based on actual VNF usage rather than allocated capacity. A record of operators' VNF usage and deployment may be made available in the RIMs and the associated proofs. In one example, the VNF vendor can check the RIMs to determine the average load handled by the deployed VNFs and bill the VNF operators based on the average loads associated with the VNFs.

Moreover, with implementations of the solution described herein, VNF vendors can be assured through proofs that the VNF operators cannot provide fraudulent information to the VNF vendors. In some examples, the VNF vendors can check the RIMs to determine if the VNF image has been tampered with. If tampering has occurred, the image hash in the RIM XML would have been changed. Thus, by matching the image hash in the RIM XML, the VNF vendors can be assured that the VNF image has not been tampered.

In some examples, the VNF vendors can check the geolocation of the deployed VNFs from the RIM XML to determine whether the VNF operator has the appropriate rights to run the VNFs at a particular geographical site.

In some examples, the VNF vendors can check the aggregated RIM proofs to determine whether there are any violations of the assigned policy. For instance, the VNF vendors can detect whether there are any unpermitted spawning of VNF instances.

In some examples, the VNF vendors can determine whether any critical components, such as, the resource manager, usage rights repository, or proof daemon, are tampered with by the VNF operator. Specifically, the VNF vendors can do so by verifying the compliance proofs as shown in FIGs. 3A-3B.

In some examples, the VNF vendors can determine whether the VNF operator fails to comply with VNF usage policy, e.g., by running VNFs on compromised machines that provide dishonest RIM state. Specifically, the VNF vendors can do so by checking the host PCR measurements in the compliance proofs.

Without the implementations described herein, the VNF vendors would either have (1) rigid VNF offerings (e.g., small, medium, or large VNF licenses) without flexibility of resources which can be allocated to them, or (2) lose control of VNF usage by the VNF operators. The implementations of the solution described herein allow the VNF vendors to charge operators based on either allocated capacity or actually used capacity. Thus, it helps the VNF operators exploit NFV's resource flexing ability. As an example, the resource manager can decide resources allocated to each new VNF to be spawned. Specifically, the resources can be allocated in terms of vCPUs and vMem assigned. Fine-grained choices can be made to allocate resources and avoid over-provisioning or under-provisioning the resources, thereby enhancing VNF operations.

### Processes to Verify Usage of VNF by a Plurality of Compute Nodes Comply with Allowed Usage Rights

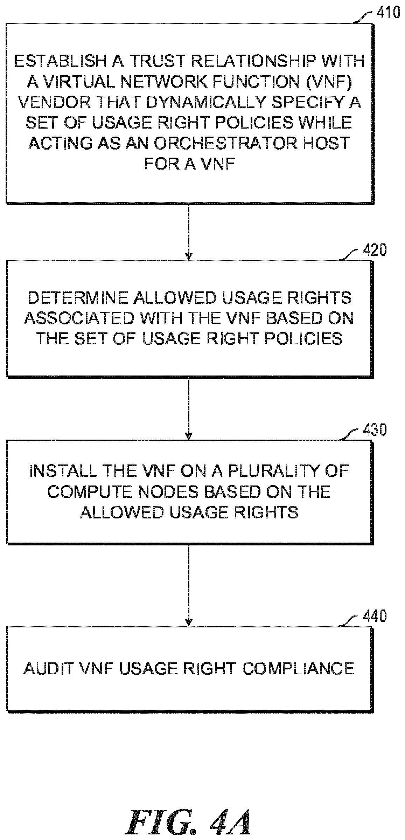

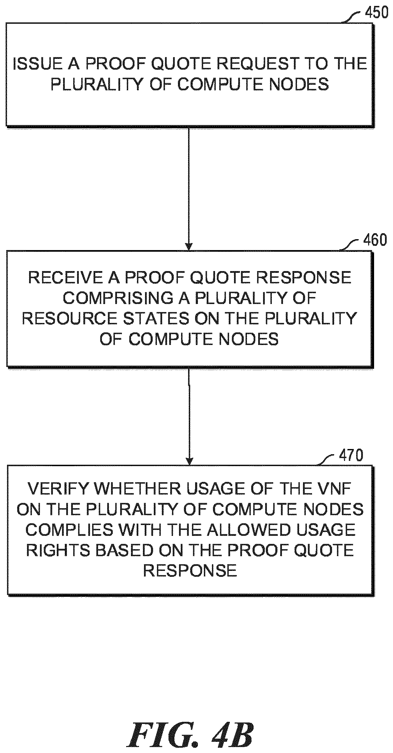

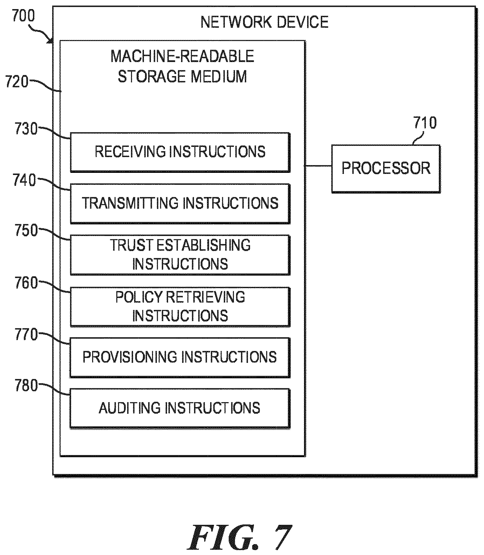

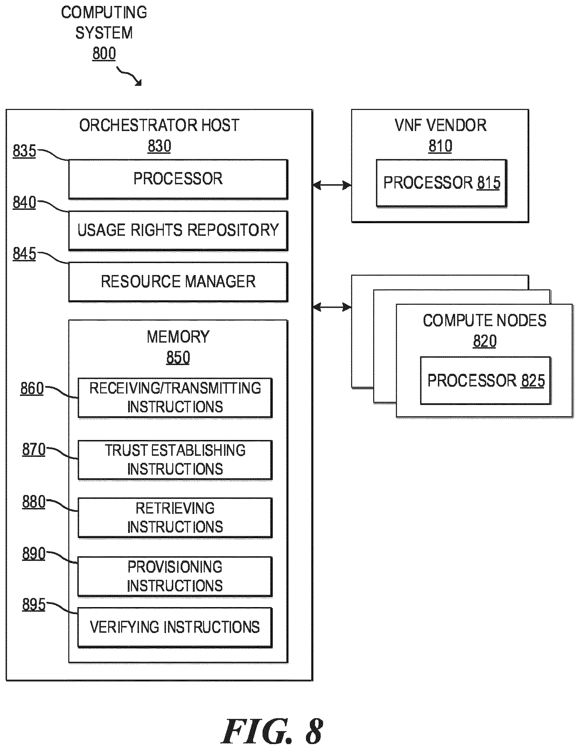

In discussing FIGs. 4-6, references may be made to the components in FIG. 1-3 to provide contextual examples. In one implementation, orchestrator host 180 described in FIG. 1 executes operations 410-470, 510-550, and 610-640 to verify the usage of VNF by a plurality of compute nodes comply with allowed usage rights. In other implementations, a VNF vendor and/or a trusted third party can perform the audit operations described in 410-470, 510-550, and 610-640 on an off-premise location. Further, although FIGs. 4-6 are described as implemented by a network device, it may be executed on other suitable devices or components. For example, FIGs. 4-6 may be implemented in the form of executable instructions on a machine-readable storage medium 720 as in FIG. 7. In addition, the executable instructions may be stored on memory 850 in a computing system 800 as in FIG. 8.

FIGs. 4A-4B are flowcharts of an example process of verifying that usage of VNF by a plurality of compute nodes comply with allowed usage rights. During operations, a network device, acting as an orchestrator host for a virtual network function (VNF), can establish a trust relationship with a VNF vendor that dynamically specify a set of usage right policies (operation 410). Then, the network device can determine allowed usage rights associated with the VNF based on the set of usage right policies (operation 420). Further, the network device can install the VNF on a plurality of compute nodes based on the allowed usage rights (operation 430). Then, the network device can audit VNF usage right compliance (operation 440). Specifically, while auditing VNF usage right compliance, the network device can issue a proof quote request to the plurality of compute nodes (operation 450). In addition, the network device can receive a proof quote response comprising a plurality of resource states on the plurality of compute nodes (operation 460). Furthermore, the network device can verify whether usage of the VNF on the plurality of compute nodes complies with the allowed usage rights based on the proof quote response (operation 470).

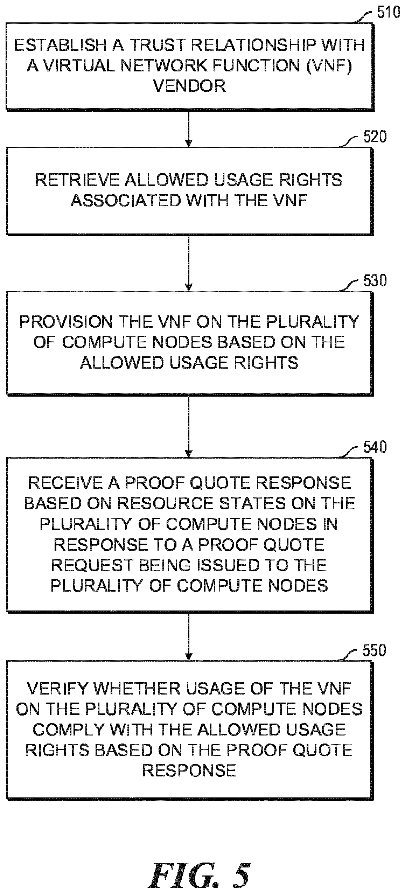

FIG. 5 is a flowchart of another example process of verifying that usage of VNF by a plurality of compute nodes comply with allowed usage rights. During operations, a network device, acting as an orchestrator host for a VNF, can establish a trust relationship with a VNF vendor (operation 510). Also, the network device can retrieve allowed usage rights associated with the VNF (operation 520). Then, the network device can provision the VNF on the plurality of compute nodes based on the allowed usage rights (operation 530). In response to a proof quote request being issued to the plurality of compute nodes, the network device can receive a proof quote response based on resource states on the plurality of compute nodes (operation 540). Moreover, the network device can verify whether usage of the VNF on the plurality of compute nodes complies with the allowed usage rights based on the proof quote response (operation 550).

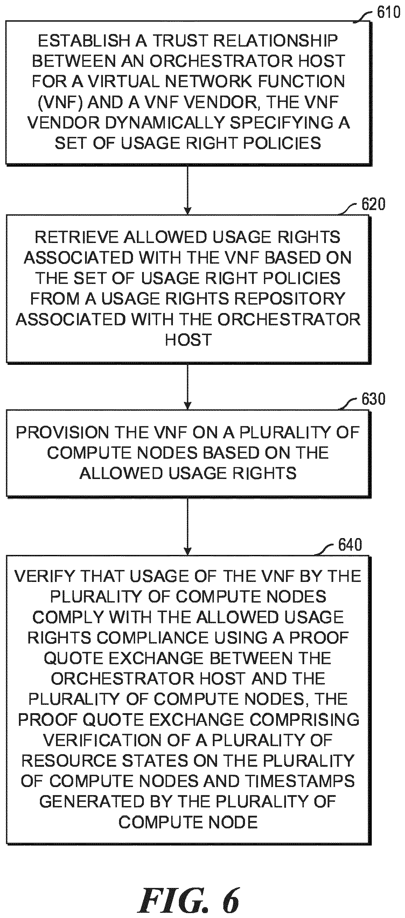

FIG. 6 is a flowchart of another example process of verifying that usage of VNF by a plurality of compute nodes comply with allowed usage rights. During operations, a network device, acting as an orchestrator host for a VNF, can establish a trust relationship between an orchestrator host for a VNF and a VNF vendor, whereas the VNF vendor can dynamically specify a set of usage right policies (operation 610). The network device can also retrieve allowed usage rights associated with the VNF based on the set of usage right policies from a usage rights repository associated with the orchestrator host (operation 620). Furthermore, the network device can provision the VNF on a plurality of compute nodes based on the allowed usage rights (operation 630). Then, the network device can verify that usage of the VNF by the plurality of compute nodes comply with the allowed usage rights compliance using a proof quote exchange between the orchestrator host and the plurality of compute nodes (operation 640). Here, the proof quote exchange includes verification of a plurality of resource states on the plurality of compute nodes and timestamps generated by the plurality of compute node.

In some examples, the network device further receives a remote attestation request, which includes a request for a plurality of states of configuration registers in a secure cryptoprocessor. Then, the network device can transmit a remote attestation response, which includes a plurality of states stored in the configuration registers that are signed with a security key of the secure cryptoprocessor (e.g., a TPM). In response to the plurality of states in the remote attestation response matching expected states associated with the VNF specified by the VNF vendor, the network device can establish the trust relationship with the VNF vendor.

In some examples, the set of usage right policies indicate at least one deployment limitation associated with the VNF, the deployment limitation comprising an allowed number of virtual processors allocated to the plurality of compute nodes for executing the VNF, an allowed size of memory allocated to the plurality of compute nodes for executing the VNF, an allowed number of flows processed by the VNF per second, a geolocation where the VNF is allowed to be executed, and a credit-based metric that indicates a capacity of the VNF usable by the plurality of compute nodes.

In some examples, the network device can generate a plurality of resource information manifests (RIMs). Each RIM may correspond to an instance of deployed VNF on the plurality of compute nodes. Here, the RIMs include resource attributes, security attributes, and load attributes.

In some examples, the network device further receives a content proof of at least one RIM generated by at least one compute node. The content proof can facilitate verification of a state of the at least one compute node and a time at which the content proof is generated. Also, the content proof may include a combination of at least (1) a hash of the state of the at least one compute node, and (2) a hash of a time server that periodically issues a time quote for verification of timestamps used by the plurality of compute nodes. In some examples, the content proof may correspond to a plurality of RIMs generated by a given compute node in the plurality of compute nodes. Thus, the content proof can include an aggregation of a plurality of hashes. The plurality of hashes may be aggregated using, for example, a Merkle tree or an authenticated dictionary.

In some examples, while determining the allowed usage rights associated with the VNF, the network device can further retrieve from a usage rights repository the set of usage right policies that define the allowed usage rights using allocated capacity. Then, the network device can map resource usage by the plurality of compute nodes associated with the VNF to an allocated capacity on the plurality of compute nodes. Then, the network device can determine the allowed usage rights based at least in part on the mapping between the resource usage and the allocated capacity.

### Network Device to Verify That sage of VNF by a Plurality of Compute Nodes Comply with Allowed Usage Rights

FIG. 7 is a block diagram of an example network device with at least one processor 710 to execute instructions 730-780 within a machine-readable storage medium 720 to verify that usage of VNF by a plurality of compute nodes comply with allowed usage rights. Instructions 730-780 may include receiving instructions 730, transmitting instructions 740, trust establishing instructions 750, policy retrieving instructions 760, provisioning instructions 770, and auditing instructions 780.

As used herein, "network device" generally includes a device that is adapted to transmit and/or receive signaling and to process information within such signaling such as a station (e.g., any data processing equipment such as a computer, cellular phone, personal digital assistant, tablet devices, etc.), an access point, data transfer devices (such as network switches, routers, controllers, etc.) or the like.

Although the network device 700 includes at least one processor 710 and machine-readable storage medium 720, it may also include other components that would be suitable to one skilled in the art. For example, network device 700 may include an additional processing component and/or storage. In another implementation, the network device executes instructions 730-780. Network device 700 is an electronic device with the at least one processor 710 capable of executing instructions 730-780, and as such implementations of network device 700 include a mobile device, server, data center, networking device, client device, computer, loT device, or other type of electronic device capable of executing instructions 730-780. The instructions 730-780 may be implemented as methods, functions, operations, and other processes implemented as machine-readable instructions stored on the storage medium 720, which may be non-transitory, such as hardware storage devices (e.g., random access memory (RAM), read only memory (ROM), erasable programmable ROM, electrically erasable ROM, hard drives, and flash memory). The machine-readable storage medium 720 includes instructions 730-780 for the processor 710 to fetch, decode, and execute.

FIG. 8 is a block diagram of an example computing system 800 that includes a VNF vendor 810, a plurality of compute nodes 820, and a network device acting as an orchestrator host 830 to verify that usage of VNF by a plurality of compute nodes comply with allowed usage rights. VNF vendor 810 may include a processor 815. Compute node 820 may include a processor 825. Likewise, orchestrator host 830 may include a processor 835, a usage rights repository 840, a resource manager 845, and a memory 850. Memory 850 may be an electronic, magnetic, or optical memory, storage, flash-drive, or other physical device that contains or stores executable instructions 860-895. Instructions 860-895 may include receiving/transmitting instructions 860, trust establishing instructions 870, retrieving instructions 880, provisioning instructions 890, and verifying instructions 895.

Thus, memory 850 may include, for example, Random Access Memory (RAM), an Electrically Erasable Programmable Read-Only Memory (EEPROM), a storage drive, a memory cache, network storage, a Compact Disc Read Only Memory (CDROM) and the like. As such, the memory 850 may include an application and/or firmware which can be utilized independently and/or in conjunction with the at least one processor 835 to fetch, decode, and/or execute instructions of memory 850. The application and/or firmware may be stored on memory 850 and/or stored on another location of the computing system 800.

Instructions 730-780 (or 860-895) may be executed by processor 710 (or processor 835) to verify that usage of VNF by a plurality of compute nodes comply with allowed usage rights. Specifically, the at least one processor 710 (or processor 835) can execute instructions 730-780 (or instructions 860-895) to: establish a trust relationship with a VNF vendor that dynamically specify a set of usage right policies; determine allowed usage rights associated with the VNF based on the set of usage right policies; install the VNF on a plurality of compute nodes based on the allowed usage rights; audit VNF usage right compliance; issue a proof quote request to the plurality of compute nodes; receive a proof quote response comprising a plurality of resource states on the plurality of compute nodes; verify whether usage of the VNF on the plurality of compute nodes complies with the allowed usage rights based on the proof quote response; receive a remote attestation request comprising a request for a plurality of states of configuration registers in a secure cryptoprocessor; transmit a remote attestation response comprising the plurality of states stored in the configuration registers that are signed with a security key of the secure cryptoprocessor; determine whether the plurality of states in the remote attestation response match expected states associated with the VNF specified by the VNF vendor; generate a plurality of resource information manifests (RIMs), each RIM corresponding to an instance of deployed VNF on the plurality of compute nodes, wherein the RIMs comprise resource attributes, security attributes, and load attributes; etc.

Moreover, the at least one processor 710 (or processor 835) can further execute instructions 730-780 (or instructions 860-895) to: receive a content proof of at least one RIM generated by at least one compute node, wherein the content proof facilitates verification of a state of the at least one compute node and a time at which the content proof is generated; retrieve from a usage rights repository the set of usage right policies that define the allowed usage rights using allocated capacity; map resource usage by the plurality of compute nodes associated with the VNF to the allocated capacity; determine the allowed usage rights based at least in part on the mapping between the resource usage and the allocated capacity; provision the VNF on the plurality of compute nodes based on the allowed usage rights; receive a proof quote response based on resource states on the plurality of compute nodes in response to a proof quote request being issued to the plurality of compute nodes; verify whether usage of the VNF on the plurality of compute nodes comply with the allowed usage rights based on the proof quote response; complete a remote attestation exchange comprising a request and a response for a plurality of orchestrator host states of configuration registers in a secure cryptoprocessor; etc.

## Claims

1. A method comprising:
establishing (410, 510), by a network device acting as an orchestrator host (180, 220) for a virtual network function VNF, a trust relationship with a VNF vendor (190, 210) that dynamically specifies a set of usage right policies;
determining (420), by the network device, allowed usage rights associated with the VNF based on the set of usage right policies;
installing (430), by the network device, the VNF on a plurality of compute nodes (120, 250) based on the allowed usage rights; and
auditing (440), by the network device, VNF usage right compliance by:
issuing (450) a proof quote request (288) to the plurality of compute nodes (120, 250);
receiving (460, 540) a proof quote response (292) comprising a
plurality of resource states on the plurality of compute nodes(120, 250); and verifying (470, 550) whether usage of the VNF on the plurality of compute nodes complies with the allowed usage rights based on the proof quote response (292);
wherein:
the orchestrator host (180) includes an orchestrator host trusted platform module TPM (185) and runs a host operating system (170);
each compute node (120), from the plurality of compute nodes (120) includes a compute node TPM (125) and a proof daemon (130);
whereby the TPMs contain several Platform Configuration Registers PCRs;
whereby establishing the trust relationship with the VNF vendor comprises:
receiving, by the network device, a remote attestation request (270) comprising a request for a plurality of states of configuration registers in the orchestrator host TPM (185);
transmitting, by the network device, a remote attestation response comprising the plurality of states stored in the configuration registers that are signed with a security key of the orchestrator host TPM (185); and
in response to the plurality of states in the remote attestation response matching expected states associated with the VNF specified by the VNF vendor, establishing the trust relationship with the VNF vendor; and
whereby each compute node (120) running the VNF writes a plurality of hash values into PCRs of the compute node TPM (125) as verification of VNF states, which are compared at the VNF vendor with expected VNF states for VNF usage right compliance.

2. The method of claim 1, wherein the set of usage right policies indicates at least one deployment limitation associated with the VNF, the at least one deployment limitation comprising an allowed number of virtual processors allocated to the plurality of compute nodes (120, 240) for executing the VNF, an allowed size of memory allocated to the plurality of compute nodes for executing the VNF, an allowed number of flows processed by the VNF per second, a geolocation where the VNF is allowed to be executed, and a credit-based metric that indicates a capacity of the VNF usable by the plurality of compute nodes (120, 240).

3. The method of claim 1, further comprising:
generating a plurality of resource information manifests RIMs, each RIM corresponding to an instance of deployed VNF on the plurality of compute nodes (120, 240), wherein the plurality of RIMs comprise resource attributes, security attributes, and load attributes.

4. The method of claim 1, further comprising:
receiving a content proof of at least one RIM generated by at least one compute node, wherein the content proof facilitates verification of a state of the at least one compute node and a time at which the content proof is generated.

5. The method of claim 4, wherein the content proof comprises a combination of at least (1) a hash of the state of the at least one compute node, and (2) a hash of a time server (140) that periodically issues a time quote for verification of timestamps used by the plurality of compute nodes(120, 240).

6. The method of claim 4, wherein the content proof corresponds to a plurality of RIMs generated by the plurality of compute nodes (120, 240), and wherein the content proof comprises an aggregation of a plurality of hashes.

7. The method of claim 6, wherein the plurality of hashes are aggregated using one of a Merkle tree and an authenticated dictionary.

8. The method of claim 1, wherein determining the allowed usage rights associated with the VNF further comprises:
retrieving from a usage rights repository (160) the set of usage right policies that define the allowed usage rights using allocated capacity;
mapping resource usage by the plurality of compute nodes (120, 240) associated with the VNF to the allocated capacity; and
determining the allowed usage rights based at least in part on the mapping between the resource usage and the allocated capacity.

9. A system comprising at least:
a virtual network function VNF vendor (190, 210) comprising a first hardware processor;
a plurality of compute nodes (120) that deploy a VNF offered by the VNF vendor;
an orchestrator host (180, 220) comprising a usage rights repository (160, 230), a resource manager (150), and a second hardware processor to allocate the plurality of compute nodes to the VNF, the system being adapted to implement the method of any of claims 1 to 8.

10. A non-transitory machine-readable storage medium encoded with instructions executable by a plurality of processors, the machine-readable storage medium comprising instructions that, when executed, cause the plurality of processors to implement any of method claims 1 to 8.

## Patentansprüche

1. Verfahren, das Folgendes umfasst:
Einrichten (410, 510), durch ein Netzwerkgerät, das als Orchestrator-Host (180, 220) einer virtuellen Netzwerkfunktion, VNF, dient, einer Vertrauensbeziehung mit einem VNF-Anbieter (190, 210), durch den dynamisch eine Menge von Nutzungsrechtsrichtlinien spezifiziert wird;
Bestimmen (420), durch das Netzwerkgerät, von zulässigen Nutzungsrechten, die der VNF zugeordnet sind, basierend auf der Menge von Nutzungsrechtsrichtlinien;
Installieren (430), durch das Netzwerkgerät, der VNF auf mehreren Datenverarbeitungsknoten (120, 250) basierend auf den zulässigen Nutzungsrechten; und
Prüfen (440), durch das Netzwerkgerät, der Einhaltung der VNF-Nutzungsrechte durch:
Ausgeben (450) einer Nachweismitteilungs-Anforderung (288) an die mehreren Datenverarbeitungsknoten (120, 250);
Empfangen (460, 540) einer Nachweismitteilungs-Antwort (292), die mehrere Ressourcenzustände an den mehreren Datenverarbeitungsknoten (120, 250) umfasst; und
Überprüfen (470, 550), basierend auf der Nachweismitteilungs-Antwort (292), ob durch die Verwendung der VNF an den mehreren Datenverarbeitungsknoten die zulässigen Nutzungsrechte eingehalten werden;
wobei:
der Orchestrator-Host (180) ein Trusted Platform Module, TPM, (185) des Orchestrator-Host aufweist und ein Host-Betriebssystem (170) ausführt;
jeder Datenverarbeitungsknoten (120) aus den mehreren Datenverarbeitungsknoten (120) ein Datenverarbeitungsknoten-TPM (125) und einen Nachweis-Daemon (130) aufweist;
wodurch die TPM mehrere Platform Configuration Registers, PCR, aufweisen;
wodurch das Einrichten der Vertrauensbeziehung mit dem VNF-Anbieter Folgendes umfasst:
Empfangen einer Remote-Attestation-Anforderung (270) durch das Netzwerkgerät, die eine Anforderung mehrerer Zustände von Konfigurationsregistern in dem Orchestrator-Host-TPM (185) umfasst;
Übertragen, durch das Netzwerkgerät, einer Remote Attestation-Antwort, die mehrere in den Konfigurationsregistern gespeicherte Zustände umfasst, die mit einem Sicherheitsschlüssel des Orchestrator-Host-TPM (185) signiert sind; und
als Reaktion auf die mehreren Zuständen in der Remote-Attestation-Antwort, die mit erwarteten Zuständen übereinstimmen, die der durch den VNF-Anbieter spezifizierten VNF zugeordnet sind, Einrichten der Vertrauensbeziehung mit der VNF-Anbieter; und
wodurch jeder Datenverarbeitungsknoten (120), auf dem die VNF ausgeführt wird, zur Verifikation von VNF-Zuständen, die zur Einhaltung der VNF-Nutzungsrechte bei dem VNF-Anbieter mit den erwarteten VNF-Zuständen verglichen werden, mehrere Hash-Werte in PCR des Datenverarbeitungsknoten-TPM (125) schreibt.

2. Verfahren nach Anspruch 1, wobei die Menge von Nutzungsrechtsrichtlinien mindestens eine der VNF zugeordnete Bereitstellungsbeschränkung angibt, wobei die mindestens eine Bereitstellungsbeschränkung umfasst: eine zulässige Anzahl von virtuellen Prozessoren, die den mehreren Datenverarbeitungsknoten (120, 240) zum Ausführen der VNF zugewiesen sind, eine zulässige Speichergröße, die den mehreren Datenverarbeitungsknoten zum Ausführen der VNF zugewiesen ist, eine zulässige Anzahl von Abläufen, die durch die VNF pro Sekunde verarbeitet werden, einen Ort, an dem die VNF ausgeführt werden darf, und eine guthabenbasierte Metrik umfasst, die eine Kapazität der VNF anzeigt, die durch die mehreren Datenverarbeitungsknoten (120, 240) verwendet werden kann.

3. Verfahren nach Anspruch 1, das ferner Folgendes umfasst:
Erzeugen mehrerer Ressourceninformationsmanifeste, RIM, wobei jedes RIM einer Instanz der bereitgestellten VNF an den mehreren Datenverarbeitungsknoten (120, 240) entspricht, wobei die mehreren RIM Ressourcenattribute, Sicherheitsattribute und Lastattribute umfassen.

4. Verfahren nach Anspruch 1, das ferner Folgendes umfasst:
Empfangen eines Inhaltsnachweises mindestens eines RIM, das durch mindestens einen Datenverarbeitungsknoten erzeugt wurde, wobei der Inhaltsnachweis die Verifikation eines Zustands des mindestens einen Datenverarbeitungsknotens und eines Zeitpunkts, zu dem der Inhaltsnachweis erzeugt wurde, ermöglicht.

5. Verfahren nach Anspruch 4, wobei der Inhaltsnachweis eine Kombination aus mindestens (1) einem Hash des Zustands des mindestens einen Datenverarbeitungsknotens und (2) einem Hash eines Zeitservers (140) umfasst, der zur Verifikation von Zeitstempeln, die durch die mehreren Datenverarbeitungsknoten (120, 240) verwendet werden, in regelmäßigen Abständen eine Zeitmitteilung ausgibt.

6. Verfahren nach Anspruch 4, wobei der Inhaltsnachweis mehreren RIM entspricht, die durch die mehreren Datenverarbeitungsknoten (120, 240) erzeugt wurden, und wobei der Inhaltsnachweis eine Aggregation mehrerer Hashs umfasst.

7. Verfahren nach Anspruch 6, wobei die mehreren Hashs unter Verwendung eines Merkle-Baums oder eines authentifizierten Verzeichnisses aggregiert werden.

8. Verfahren nach Anspruch 1, wobei das Bestimmen der zulässigen Nutzungsrechte, die der VNF zugeordnet sind, ferner Folgendes umfasst:
Abrufen, aus einem Nutzungsrechte-Repository (160), der Menge von Nutzungsrechtsrichtlinien, die die zulässigen Nutzungsrechte definieren, unter Verwendung der zugewiesenen Kapazität;
Zuordnen der Ressourcennutzung durch die mehreren Datenverarbeitungsknoten (120, 240), die der VNF zugeordnet sind, zu der zugewiesenen Kapazität; und
Bestimmen der zulässigen Nutzungsrechte zumindest teilweise basierend auf der Zuordnung zwischen der Ressourcennutzung und der zugewiesenen Kapazität.

9. System, das mindestens Folgendes umfasst:
einen Anbieter virtueller Netzwerkfunktionen, VNF, (190, 210), der einen ersten Hardwareprozessor umfasst;
mehrere Datenverarbeitungsknoten (120), die eine durch den VNF-Anbieter angebotene VNF bereitstellen;
einen Orchestrator-Host (180, 220), der ein Nutzungsrechte-Repository (160, 230), einen Ressourcenmanager (150) und einen zweiten Hardwareprozessor umfasst, um die mehreren Datenverarbeitungsknoten der VNF zuzuweisen, wobei das System geeignet ist, das Verfahren nach einem der Ansprüche 1 bis 8 zu implementieren.

10. Nichtflüchtiges, maschinenlesbares Speichermedium, das mit Anweisungen codiert ist, die durch mehrere Prozessoren ausgeführt werden können, wobei das maschinenlesbare Speichermedium Anweisungen umfasst, die bei Ausführung die mehreren Prozessoren dazu veranlassen, einen der Verfahrensansprüche 1 bis 8 zu implementieren.

## Revendications

1. Procédé comprenant :
l'établissement (410, 510), par un dispositif réseau agissant en tant qu'hôte d'orchestrateur (180, 220) pour une fonction réseau virtuel VNF, d'une relation de confiance avec un fournisseur de VNF (190, 210) qui spécifie dynamiquement un ensemble de politiques de droits d'utilisation ;
la détermination (420), par le dispositif réseau, de droits d'utilisation permis associés à la VNF sur la base de l'ensemble des politiques de droits d'utilisation ;
l'installation (430), par le dispositif réseau, de la VNF sur une pluralité de nœuds de calcul (120, 250) sur la base des droits d'utilisation permis ; et
l'audit (440), par le dispositif réseau, du respect des droits d'utilisation de la VNF :
en émettant (450) une demande de compte-rendu de preuve (288) à destination de la pluralité de nœuds de calcul (120, 250) ;
en recevant (460, 540) une réponse de compte-rendu de preuve (292) comprenant une pluralité d'états de ressources sur la pluralité de nœuds de calcul (120, 250) ; et
en vérifiant (470, 550) que l'utilisation de la VNF sur la pluralité de nœuds de calcul respecte les droits d'utilisation permis sur la base de la réponse de compte-rendu de preuve (292) ;
dans lequel :
l'hôte d'orchestrateur (180) comporte un module de plateforme de confiance d'hôte d'orchestrateur TPM (185) et exécute un système d'exploitation d'hôte (170) ;
chaque nœud de calcul (120) de la pluralité de nœuds de calcul (120) comporte un TPM de nœud de calcul (125) et un démon de preuve (130) ;
moyennant quoi les TPM contiennent plusieurs registres de configuration de plateforme PCR ;
moyennant quoi l'établissement de la relation de confiance avec le fournisseur de VNF comprend :
la réception, par le dispositif réseau, d'une demande d'attestation à distance (270) comprenant une demande pour une pluralité d'états de registres de configuration dans le TPM d'hôte d'orchestrateur (185) ;
la transmission, par le dispositif réseau, d'une réponse d'attestation à distance comprenant la pluralité d'états stockés dans les registres de configuration qui sont signés à l'aide d'une clé de sécurité du TPM d'hôte d'orchestrateur (185) ; et
en réponse au fait que la pluralité d'états dans la réponse d'attestation à distance correspond aux états attendus associés à la VNF spécifiée par le fournisseur de VNF, l'établissement de la relation de confiance avec le fournisseur de VNF ; et
moyennant quoi chaque nœud de calcul (120) exécutant la VNF écrit une pluralité de valeurs de hachage dans des PCR du TPM de nœud de calcul (125) en tant que vérification des états de VNF, qui sont comparés chez le fournisseur de VNF avec des états de VNF attendus pour le respect des droits d'utilisation de la VNF.

2. Procédé selon la revendication 1, l'ensemble de politiques de droit d'utilisation indiquant au moins une limitation de déploiement associée à la VNF, l'au moins une limitation de déploiement comprenant un nombre permis de processeurs virtuels alloués à la pluralité de nœuds de calcul (120, 240) pour exécuter la VNF, une taille de mémoire permise allouée à la pluralité de nœuds de calcul pour exécuter la VNF, un nombre permis de flux traités par la VNF par seconde, une géolocalisation d'où l'exécution de la VNF est permise et une mesure basée sur le crédit qui indique une capacité de la VNF utilisable par la pluralité de nœuds de calcul (120,240).

3. Procédé selon la revendication 1, comprenant en outre :
la génération d'une pluralité de manifestes d'informations sur les ressources, RIM, chaque RIM correspondant à une instance de VNF déployée sur la pluralité de nœuds de calcul (120, 240), la pluralité de RIM comprenant des attributs de ressource, des attributs de sécurité et des attributs de charge.

4. Procédé selon la revendication 1, comprenant en outre :
la réception d'une preuve de contenu d'au moins un RIM généré par au moins un nœud de calcul, la preuve de contenu facilitant la vérification d'un état de l'au moins un nœud de calcul et d'un moment auquel la preuve de contenu est générée.

5. Procédé selon la revendication 4, la preuve de contenu comprenant une combinaison d'au moins (1) un hachage de l'état de l'au moins un nœud de calcul, et (2) un hachage d'un serveur temporel (140) qui émet périodiquement un compte-rendu temporel pour vérifier des horodatages utilisés par la pluralité de nœuds de calcul (120, 240).

6. Procédé selon la revendication 4, la preuve de contenu correspondant à une pluralité de RIM générés par la pluralité de nœuds de calcul (120, 240), et la preuve de contenu comprenant une agrégation d'une pluralité de hachages.

7. Procédé selon la revendication 6, la pluralité de hachages étant agrégés à l'aide d'un arbre de Merkle ou d'un dictionnaire authentifié.

8. Procédé selon la revendication 1, la détermination des droits d'utilisation permis associés à la VNF comprenant en outre :
la récupération à partir d'un référentiel de droits d'utilisation (160) de l'ensemble de politiques de droits d'utilisation qui définissent les droits d'utilisation permis à l'aide de la capacité allouée ;
la mise en correspondance de l'utilisation des ressources par la pluralité de nœuds de calcul (120, 240) associés à la VNF avec la capacité allouée ; et
la détermination des droits d'utilisation permis au moins en partie sur la base de la mise en correspondance entre l'utilisation des ressources et la capacité allouée.

9. Système comprenant au moins :
un fournisseur de fonction réseau virtuel VNF (190, 210) comprenant un premier processeur matériel ;
une pluralité de nœuds de calcul (120) qui déploient une VNF proposée par le fournisseur de VNF ;
un hôte d'orchestrateur (180, 220) comprenant un référentiel de droits d'utilisation (160, 230), un gestionnaire de ressources (150) et un second processeur matériel devant allouer la pluralité de nœuds de calcul à la VNF, le système étant adapté à mettre en œuvre le procédé selon l'une quelconque des revendications 1 à 8.

10. Support de stockage lisible par machine non transitoire sur lequel sont codées des instructions exécutables par une pluralité de processeurs, le support de stockage lisible par machine comprenant des instructions qui, lorsqu'elles sont exécutées, amènent la pluralité de processeurs à mettre en œuvre l'une quelconque des revendications 1 à 8 du procédé.
